Europäisches Patentamt

European Patent Office

Office européen des brevets

(19)

(11) Veröffentlichungsnummer: **0 262 122 B1**

# (12) EUROPÄISCHE PATENTSCHRIFT

(45) Veröffentlichungstag der Patentschrift: **04.07.90**

(21) Anmeldenummer: **86902320.0**

(22) Anmeldetag: **09.04.86**

(86) Internationale Anmeldenummer:
**PCT/DE86/00150**

(87) Internationale Veröffentlichungsnummer:
**WO 86/07143 04.12.86 Gazette 86/26**

(51) Int. Cl.⁵: **G 01 C 21/22**

## (54) NAVIGATIONSSYSTEM FÜR FAHRZEUGE.

(30) Priorität: **30.05.85 DE 3519276**

(43) Veröffentlichungstag der Anmeldung:
**06.04.88 Patentblatt 88/14**

(45) Bekanntmachung des Hinweises auf die
Patenterteilung:
**04.07.90 Patentblatt 90/27**

(84) Benannte Vertragsstaaten:
**DE FR GB IT SE**

(56) Entgegenhaltungen:

**Patents Abstracts of Japan, Band 7, Nr.245 (P-233)(1390) 29.Oktober 1983 & JP,A,58132612**

(73) Patentinhaber: **ROBERT BOSCH GMBH
Postfach 50
D-7000 Stuttgart 1 (DE)**

(72) Erfinder: **KNOLL, Peter
Schweitzerstrasse 9
D-7505 Ettlingen (DE)**
Erfinder: **KÖNIG, Winfried
Murgstrasse 2
D-7507 Pfinztal (DE)**
Erfinder: **RAPPS, Peter
Badenerstrasse 2
D-7500 Karlsruhe 41 (DE)**

EP 0 262 122 B1

**Beschreibung**

Stand der Technik

Die Erfindung geht aus von einem Navigationssystem nach der Gattung des Anspruch 1. Bei einem bekannten System dieser Art (DE—OS—29 47 470) wird die Projektion von Landkarten bzw. Straßenkarten auf einen Bildschirm vorgeschlagen, wobei auf der Bildschirm—Straßendarstellung die jeweilige Position des Fahrzeugs beim Abfahren einer Fahrroute durch eine Positionsanzeige dargestellt wird. Abweichungen der angezeigten Position von den dargestellten Straßen der Straßenkarte werden von einer Korrektureinrichtung erfaßt und über eine Regelschaltung in der Weise korrigiert, daß die angezeigte Fahrzeugposition wieder auf die Fahrroute zurückgeführt wird. Diese Navigationsvorrichtung besitzt jedoch nicht die Möglichkeit, eine gewünschte Fahrroute in das Gerät elektrisch einzugeben und zu speichern.

Bei einem anderen Navigationssystem für Fahrzeuge (DE—OS—33 41 679) ist es bekannt, vor Antritt einer Fahrt mittels einer Eingabevorrichtung und einer in ihr eingelegten Straßenkarte die gewünschte Fahrroute durch deren Nachfahren mit einem Codierstift in die Navigationseinrichtung einzulesen und abzuspeichern. Während der Fahrt wird dann die eingegebene Fahrroute über ein zusätzliches Anzeigegerät dargestellt und außerdem wird darin der augenblickliche Standort des Fahrzeugs zumindest zeitweise markiert. Hierbei ist nachteilig, daß zur Darstellung der Fahrroute sowie zur Eingabe der Fahrroute von einer Straßenkarte voneinander getrennte Einrichtungen erforderlich sind, da sich die eingegebene und gespeicherte Fahrroute auf der Straßenkarte selbst nicht darstellen läßt.

Mit der vorliegenden Lösung wird angestrebt, die Darstellung der Straßenkarte, die Eingabe einer gewünschten Fahrroute, die Anzeige der eingegebenen Fahrroute sowie den augenblicklichen Standort des Fahrezugs an nur einer Stelle im Fahrzeug zusammenzufassen.

Vorteile der Erfindung

Das erfindungsgemäße Navigationssystem für Fahrzeuge mit den kennzeichnenden Merkmalen des Anspruch 1 hat den Vorteil, daß neben der Einblendung des jeweiligen Standortes des Fahrzeuges in die Darstellung der Straßenkarte auch noch die gewünschte Fahrroute an dieser Stelle von Hand in das Navigationssystem eingegeben und gespeichert werden kann. Durch Betätigen eines Quittungsschalters nach der Eingabe der Fahrroute in den Fahrroutenspeicher wird die gespeicherte Fahrroute in die Darstellung der Straßenkarte mit eingeblendet. Dadurch ergibt sich eine Kontrolle über die richtige Fahrrouteneingabe und zusätzlich während der Fahrt durch den eingeblendeten augenblicklichen Standort des Fahrzeuges ein guter Überblick über den weiteren Verlauf der Fahrroute zum rechtzeitigen und richtigen Einordnen des Fahrzeugs an Kreuzungen, Abzweigungen, Verkehrsinseln und dergleichen.

Weitere vorteilhafte Weiterbildungen und Verbesserungen der im Anspruch 1 angegebenen Merkmale sind durch die in den abhängigen Ansprüchen aufgeführten Maßnahmen möglich.

Besonders vorteilhaft ist es, wenn während der Fahrt zur Ermittlung von Abweichungen die Daten der gespeicherten Fahrroute laufend mit den von der Navigationseinrichtung ermittelten Daten für den jeweiligen Standort des Fahrzeuges verglichen und angezeigt werden. Beim Auftreten von Abweichungen wird der auf der Darstellung der Straßenkarte optisch angezeigte augenblickliche Standort des Fahrzeuges auf die gespeicherte Fahrroute wieder zurückgeführt.

Für die Darstellung der Straßenkarte wird in bevorzugter Weise ein Bildschirm verwendet, auf dem die Straßenkarte projiziert wird. Dies kann beispielsweise mit Hilfe eines Mikrofilmlesegerätes oder durch Verwendung einer Fernsehröhre durch Standbilddarstellung erfolgen, wobei auch bestimmte Kartenausschnitte durch Projektion bzw. Standbilddarstellung auf dem Bildschirm dargestellt werden können. Bei der Darstellung der Straßenkarte oder eines Kartenausschnittes mit einem Mikrofilmlesegerät besteht der Bildspeicher aus einem Mikrofilmmagazin, wogegen bei der Darstellung von Standbildern diese als Videokassette oder als Kompakt-Disc denkbar sind. Besonders vorteilhaft ist es, wenn die gewünschte Fahrroute mit Hilfe eines vor dem Bildschirm angeordneten durchsichtigen Tableaus in den Fahrroutenspeicher eingegeben wird, in dem die Koordinaten des auf dem Tableau aufgesetzten Stiftes beim Nachfahren der gewünschten Fahrroute auf der Darstellung der Straßenkarte laufend elektrisch ermittelt und im Fahrroutenspeicher abgelegt werden.

Bei Abweichungen des angezeigten Fahrzeugstandortes von der Fahrroute kann die Rückführung auf die gespeicherte Fahrroute vom Navigationssystem laufend selbsttätig durchgeführt werden oder jeweils durch Betätigen einer Korekturtaste. Eine solche individuelle Korrektur durch den Fahrer ist beispielsweise dann sinnvoll, wenn dieser markante Geländepunkte auf der Fahrroute erkennt.

Ziechnung

Ein Ausführungsbeispiel der Erfindung ist in der Zeichnung dargestellt und in der nachfolgenden Beschreibung näher erläutert. Es zeigen Figur 1 das erfindungsgemäße Navigationssystem für ein Fahrzeug als Blockschaltbild, Figur 2 die schematische Darstellung einer Anzeige- und Eingabevorrichtung mit angeschlossener Koppelnavigation und Figur 3 zeigt ein Flußdiagramm für den Betrieb des Navigationssystems.

Beschreibung des Ausführungsbeispiels

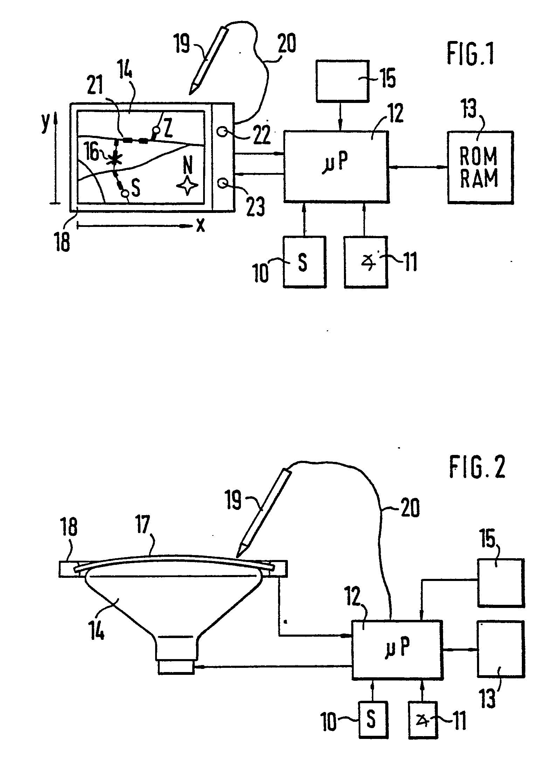

Das in Figur 1 und 2 dargestellte Navigationssystem für Kraftfahrzeuge ist mit einer Koppelnavigationseinrichtung versehen, die aus einem Weggeber 10, einem Fahrrichtungsgeber 11, einem Rechner 12 und einem Datenspeicher 13 besteht. Als Weggeber können Impulsgeber eines Tachogenerators oder entsprechende Geber an den Fahrzeugrädern verwendet werden, die gegebenenfalls bereits im Fahrzeug vorhanden sind, beispielsweise für einen Fahrdatenrechner oder für ein Antiblockiersystem. Als Fahrrichtungsgeber 11 kann ein Magnetometer bzw. ein elektronischer Kompaß oder ein die Drehung des Lenkrades im Fahrzeug erfassender Geber verwendet werden, der in Verbindung mit den Signalen des Weggebers 10 eine Fahrrichtungsänderung erfaßt. Die Signale des Weggebers 10 und des Fahrrichtungsgebers 11 werden über Verbindungen dem Rechner 12 zugeführt und dort verarbeitet bzw. im Datenspeicher 13, der ebenfalls am Rechner 12 angeschlossen ist, zwischengespeichert. Ferner ist am Rechner 12 eine Vorrichtung 14 zur Darstellung einer Straßenkarte angeschlossen, die mit einem Bildspeicher 15 zusammenwirkt, der ebenfalls über den Rechner 12 anzusteuern ist. Die Vorrichtung 14 zur Straßendarstellung kann aus einem Wechselrahmen zum Einschieben transparenter Straßenkarten mit dahinterliegender Beleuchtung bestehen, sie kann aus einem Bildschirm bestehen, auf den nach Art eines Mikrofilmlesegerätes Straßenkarten oder Kartenausschnitte auf den Bildschirm projiziert werden oder sie kann gemäß Figur 2 aus einer Bildröhre bestehen, auf der die gewünschte Straßenkarte bzw. ein Kartenausschnitt als Standbild dargestellt wird. Als Bildspeicher 15 kann ein Kartenmagazin, ein Mikrofilmmagazin für Bildprojektionen oder eine Videokassette bzw. eine Kompakt-Disc zur Speicherung von Standbildern verwendet werden. Bei Verwendung einer Bildröhre als Vorrichtung 14 zur Straßendarstellung wird in das aus dem Bildspeicher 15 ausgewählte Standbild der ausgewählten Straßenkarte über die Koppelnavigationseinrichtung auch noch der augenblickliche Standort 16 des Fahrzeuges gemäß Figur 1 auf der Darstellung der jeweiligen Straßenkarte optisch angezeigt. Bei der Projektion der Straßenkarte auf einen Bildschirm der Vorrichtung 14 kann dieser Standort 16 gemäß der DE—OS—29 47 470 über eine Zusatzeinrichtung eingeblendet werden, welche mit der Koppelnavigationseinrichtung verbunden ist.

Wie Figur 2 zeigt, ist unmittelbar vor dem Bildschirm der Bildröhre 14 ein durchsichtiges Tableau 17 angeordnet, das in einem Rahmen 18 gefaßt ist und an den jeweils gegenüberliegenden Seiten an Spannung gelegt ist. Durch ein nicht erkennbares Maschengeflecht von Leiterbahnen wird die gesamte Fläche des Tableaus 17 in X-Richtung und Y-Richtung derart aufgeteilt, daß beim Aufsetzen eines Stiftes 19 die X- und Y-Koordinaten des Aufsetzpunktes auf dem Tableau 17 elektrisch erfaßt und dem Rechner 12 zugeführt werden. Statt des Maschengeflechts kann auch eine transparente Widerstandsfläche o.ä. als Tableau verwendet werden. Der Rahmen 18 mit dem Tableau 17 bildet zusammen mit dem Stift 19 eine Eingabevorrichtung, mit der auf der Darstellung der Straßenkarte die gewünschte Fahrroute von Hand nachgefahren werden kann. Der Stift 19 ist über eine Leitung 20 mit einer elektrischen Schaltung im Rahmen 18 (Figur 1) oder unmittelbar mit dem Rechner 12 (Figur 2) verbunden. Mit Hilfe dieser Eingabevorrichtung kann eine gewünschte, in Figur 1 gestrichelt markierte Fahrroute 21 zwischen einem Startpunkt S und einem Zielpunkt Z in den Datenspeicher 13 eingelesen werden, indem die Koordinaten des auf dem Tableau 17 aufgesetzen Stiftes 19 beim Nachfahren der gewünschten Fahrroute 21 laufend elektrisch ermittelt und in Form elektrischer Daten über den Rechner 12 im Datenspeicher 13 ablegt werden. Der Datenspeicher 13 dient somit in einem vorbestimmten Bereich als Fahrroutenspeicher. Durch eine Quittungstaste 22 der Eingabevorrichtung kann der als Fahrroutenspeicher verwendete Bereich des Datenspeichers 13 gelöscht und der Beginn der Fahrrouteneingabe sowie deren Ende erfaßt werden. Außerdem ist die Eingabevorrichtung noch mit einer Korrekturtaste 23 versehen, durch deren Betätigung Abweichungen des ermittelten Standortes 16 des Fahrzeugs von der jeweiligen Fahrroute 21 korrigiert werden.

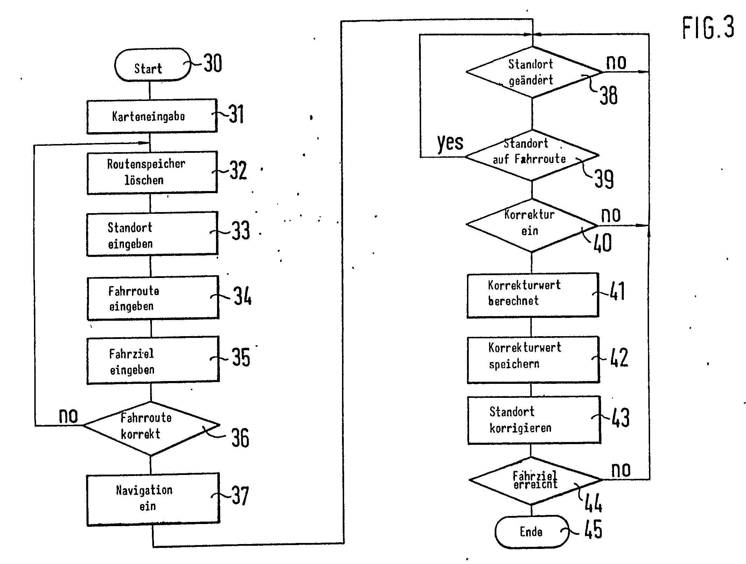

Mit Hilfe des in Figur 3 dargestellten Flußdiagramms soll nunmehr die Wirkungsweise des Navigationssystems nach Figur 1 und 2 näher erläutert werden. Mit dem Einschalten des Navigationssystems vor Fahrtantritt wird das Programm im Schritt 30 gestartet. Zunächst wird im Programmabschnitt 31 aus dem Bildspeicher 15 die gewünschte Straßenkarte ausgewählt, was in nicht dargestellter Weise durch Betätigung entsprechender Bedienungstasten am Bildspeicher oder an der Eingabevorrichtung erfolgt. Ebenso wird der Maßstab der gewählten Straßenkarte erfaßt und gespeichert. Die ausgewählte Straßenkarte wird nun auf dem Bildschirm der Bildröhre 14 dargestellt. Im nächsten Programmabschnitt 32 wird nun durch Betätigen der Quittungstaste 22 der als Routenspeicher verwendete Bereich des Datenspeichers 13 gelöscht. Anschliessend wird im Abschnitt 33 durch Aufsetzen des Stiftes 19 auf das Tableau 17 der Standort des Fahrzeugs als Startpunkt S erfaßt und über den Rechner 22 in den Routenspeicher eingegeben. Sodann wird mit dem Stift 19 auf dem Tableau 17 die gewünschte Fahrroute 21 auf der auf dem Bildschirm dargestellten Straßenkarte von Hand nachgefahren und dabei die Koordinaten des Stiftes 19 auf dem Tableau 17 laufend in Form elektrischer Signale ermittelt und über dem Rechner im Fahrroutenspeicher abgelegt. Im nächsten Programmabschnitt 35 wird schließlich der Zielpunkt Z am Ende der Fahrroute durch erneute Betätigung der Quittungstaste 22 erfaßt und im Datenspeicher 13 abgelegt. Außerdem wird im nachfolgenden Abschnitt 36 die gespeicherte Fahrroute nunmehr über den Rechner 12 auf dem Bildschirm gestrichelt und gegebenenfalls intermittierend eingeblendet und damit die eingegebene Fahrroute quittiert. Weicht diese Fahrroute 21 von den Straßen auf der Straßenkarte ab, so ist diese fehlerhaft gespeicherte Fahrroute vom Fahrer sofort erkennbar und korrigierbar, indem er durch erneutes Betätigen der Quittungstaste 22 die Eingabe der Fahrroute mit dem Programmabschnitten 32 bis 36, nochmals wiederholt.

Ist eine Korrektur der jetzt gespeicherten Fahrroute nicht mehr erforderlich, so wird im nächsten Programmabschnitt 37 die Koppelnavigation eingeschaltet, wobei nunmehr laufend die Signale des Weggebers 10 und des Fahrrichtungsgebers 11 vom Rechner 12 erfaßt und verarbeitet werden. Dabei wird im nachfolgenden Schritt 38 geprüft, ob von diesen Gebern Signale bzw. Signaländerungen eingegangen sind. Solange dies nicht der Fall ist, hat sich der Standort des Fahrzeuges noch nicht geändert; d.h., daß im Programmschritt 38 der Beginn der Fahrt abgewartet wird. Sobald nun Gebersignale des Weg bzw. Fahrrichtungsgebers 10 bzw. 11 auftreten, die erkennen lassen, daß das Fahrzeug in Bewegung ist, wird mit Hilfe dieser Signale im Rechner 12 jeweils die Entfernung von Startpunkt und die neue Fahrtrichtung ermittelt und der neue Standort des Fahrzeugs im Datenspeicher 12 zwischengespeichert. Außerdem wird in diesem Programmabschnitt 39 der ermittelte Standort des Fahrzeugs mit den Daten der gespeicherten Fahrroute verglichen und geprüft, ob sich das Fahrzeug noch auf der eingegebenen Fahrroute befindet. Solange dies der Fall ist, werden über eine Programmschleife zyklisch die Fahrzeugbewegungen ermittelt und mit der vorgegebenen Fahrroute verglichen. Im Programmabschnitt 39 wird gleichzeitig der jeweils vom Koppelnavigationssystem ermittelte Standort des Fahrzeugs durch eine Marke 16 auf dem Bildschirm 14 dargestellt.

Wird im Programmabschnitt 39 festgestellt, daß der vom Koppelnavigationssystem ermittelte Standort von der eingegebenen Fahrroute um einen fest eingegebenen oder veränderbaren Betrag abweicht, so kann diese Abweichung in Programmabschnitt 40 durch Betätigen einer Korrekturtaste 23 korrigiert werden. Wird die Korrekturtaste 23 jedoch nicht gedrückt, so springt das Programm wieder in die Schleife mit den Programmschritten 38, 39 und 40 zurück. Wird dagegen die Korrekturtaste 23 gedrückt, so ermittelt der Rechner 12 aus der Abweichung und der zurückgelegten Wegstrecke im Programmschritt 41 einen Korrekturwert für die Koppelnavigationseinrichtung und im Programmschritt 42 wird dieser Korrekturwert zunächst im Datenspeicher 13 abgelegt. Außerdem wird im Schritt 43 auf dem Bildschirm der Bildröhre 14 die Marke 16 für den augenblicklichen Standort des Fahrzeugs auf der Darstellung der Straßenkarte nunmehr auf die gespeicherte Fahrroute 21 zurückgesetzt. Im Programmschritt 44 wird geprüft, ob das im Datenspeicher 13 abgelegte Fahrziel Z erreicht ist. Sobald dies der Fall ist, wird im Programmschritt 45 die Koppelnavigation abgeschaltet. Solange dies jedoch nicht der Fall ist, wird in einer Programmschleife die Koppelnavigation mit den Programmabschnitten 38 bis 44 fortgesetzt, so daß der Fahrer laufend den augenblicklichen Standort des Fahrzeugs auf der Darstellung der Straßenkarte des Bildschirms überprüfen kann. Wird die Fahrt vorzeitig abgebrochen, so muß der Fahrer die Quittungstaste 22 betätigen und er kann dann eine neue Fahrtroute eingeben.

Die Korrekturtaste 22 kann gegebenenfalls so ausgebildet sein, daß sie z.B. nach Betätigung verrastbar ist und daß auf diese Weise die Korrektur und Rückführung des durch die Marke 16 angezeigten augenblicklichen Standortes des Fahrzeugs auf die gespeicherte Fahrroute laufend selbsttätig vom Navigationssystem durchgeführt wird. Werden dagegen Abweichungen von der Fahrroute in den Programmabschnitten 41 und 42 zur Berechnung und Zwischenspeicherung von Korrekturwerten verarbeitet, so können im Programmabschnitt 43 außer einer Standortkorrektur auf dem Bildschirm 14 auch noch die nachfolgenden Daten der Koppelnavigationseinrichtung zur Standortbestimmung des Fahrzeugs korrigiert werden. Damit wird erreicht, daß die Koppelnavigationseinrichtung ständig eine Nacheichung erfährt, die sich aus den zuvor ermittelten Abweichungen von der programmierten Fahrroute ermitteln läßt. Mit der Korrekturtaste 23 läßt sich folglich bestimmen, wann der Korrekturwert für die Koppelnavigationseinrichtung erneut berechnet und berücksichtigt werden soll. Damit ist es auch möglich, gewollte Abweichungen von der gespeicherten Fahrroute, beispielsweise durch Baustellen bedingte Umleitungen aus dem Korrekturzyklus des Navigationssystems mit den Programmschritten 41 bis 43 herauszunehmen, in dem die Korrekturtaste 23 nicht betätigt wird und folglich über die Schleife mit den Programmabschnitten 38 und 39 nur der augenblickliche Fahrzeugstandort ermittelt und angezeigt wird. Das Programm des Navigationssystems nach Figur 3 bietet dem Fahrer die Möglichkeit, die Korrektur und Rückführung der Fahrzeugposition auf die eingegebene Fahrroute individuell beim Erkennen merkanter Geländepunkte, beispielsweise Kreuzungen, Gabelungen, Plätzen oder Gebäuden durch Betätigen der Korrekturtaste 23 vorzunehmen.

**Patentansprüche**

1. Navigationssystem für Fahrzeuge mit einer Anzeigevorrichtung (14) zur Darstellung einer Straßenkarte, von der mit Hilfe der Koordinaten eines Ausgangspunktes (S) der Fahrroute (21) und einer Koppelnavigationseinrichtung fortlaufend der augenblickliche Standort (16) des Fahrzeugs und dessen Fahrrichtung ermittelt sowie auf der Darstellung der Straßenkarte optisch angezeigt wird und wobei Abweichungen des ermittelten Standortes von der Straßenführung der Straßenkarte erfaßt und korrigiert werden, dadurch gekennzeichnet, daß vor Antritt der Fahrt die gewünschte Fahrroute (21) mit einer unmittelbar vor der Anzeigevorrichtung (14) angeordneten und an einem Fahrroutenspeicher (13) angeschlossenen Eingabevorrichtung (17, 18) mit einem Stift (19) auf der Darstellung der Straßenkarte (14) von Hand nachgefahren, dabei im Fahrroutenspeicher (13) abgelegt und danach durch Betätigt einer Quittungstaste (22) die Eingabe der Fahrroute (21) in den Fahrroutenspeicher (13) beendet sowie die gespeicherte Fahrroute (21) in die Darstellung der Straßenkarte (14) eingeblendet wird.

2. Navigationssystem nach Anspruch 1, dadurch gekennzeichnet, daß während der Fahrt zur Ermittlung von Abweichungen die Daten der gespeicherten Fahrroute (21) laufend mit den von der Koppelnavigationseinrichtung (10, 11, 12) ermittelten Daten für den jeweiligen Standort (16) des Fahrzeugs verglichen und angezeigt werden sowie beim Auftreten von Abweichungen der auf der Darstellung der Straßenkarte (14) optisch angezeigte augenblickliche Standort (16) des Fahrzeugs auf die gespeicherte Fahrroute (21) zurückgeführt wird.

3. Navigationssystem nach einem der vorherigen Ansprüche, dadurch gekennzeichnet, daß die Straßenkarte auf einem Bildschirm (14) projiziert wird.

4. Navitationssystem nach Anspruch 3, dadurch gekennzeichnet, daß nur ein gewünschter Ausschnitt aus der Straßenkarte auf dem Bildschirm (14) projiziert wird.

5. Navigationssystem nach Anspruch 3 oder 4, dadurch gekennzeichnet, daß die gewünschte Fahrroute (21) mit Hilfe eines vor dem Bildschirm (14) angeordneten durchsichtigen Tableaus (17) in den Fahrroutenspeicher (13) eingegeben wird, indem die Koordinaten des auf dem Tableau (17) aufgesetzten Stiftes (19) beim Nachfahren der gewünschten Fahrroute auf der Darstellung der Straßenkarte (14) laufend elektrisch ermittelt und im Fahrroutenspeicher (13) abgelegt werden.

6. Navigationssystem nach Anspruch 2, dadurch gekennzeichnet, daß die Rückführung des angezeigten Standortes (16) des Fahrzeugs auf die gespeicherte Fahrroute (21) durch Betätigen einer Korrekturtaste (23) durchgeführt wird.

7. Navigationssystem nach Anspruch 2, dadurch gekennzeichnet, daß die Rückführung des angezeigten Standortes (16) des Fahrzeugs auf die gespeicherte Fahrroute (21) fortlaufend selbsttätig durchgeführt wird.

8. Navigationssystem nach Anspruch 2, dadurch gekennzeichnet, daß die ermittelten Abweichungen der Fahrzeubewegungen von der gespeicherten Fahrroute (21) zwischengespeichert und zur Ermittlung von Korrekturwerten verarbeitet werden, mit denen nachfolgende Daten der Koppelnavigationseinrichtung zur Standortbestimmung des Fahrzeuges korrigiert werden.

**Revendications**

1. Système de navigation pour véhicules avec un dispositif d'affichage (14) pour la représentation d'une carte routière, à partir duquel, à l'aide des coordonnées d'un point de départ (S) de l'itinéraire (21) et d'un dispositif de navigation à l'estime, l'emplacement instantané (16) du véhicule et sa direction de déplacement sont déterminés en continu, et affichés optiquement sur la représentation de la carte routière, système dans lequel des écarts entre l'emplacement ainsi déterminé et le tracé des routes de la carte routière sont détectés et corrigés, système de navigation caractérisé en ce que, avant le début du trajet, l'itinéraire souhaité (21) est suivi manuellement avec un stylet (19) sur la représentation de la carte routière (14), à l'aide d'un dispositif d'introduction (17, 18) placé immédiatement devant le dispositif d'affichage (14) et raccordé à une mémoire d'itinéraire (13), cet itinéraire souhaité étant déposé dans la mémoire d'itinéraire (13) et ensuite, par actionnement d'une touche d'accusé de réception (22), l'introduction de l'itinéraire (21) dans la mémoire d'itinéraire (13) est achevée et l'itinéraire (21) ainsi mémorisé est superposé à la représentation de la carte routière (14).

2. Système de navigation selon la revendication 1, caractérisé en ce que, pendant le déplacement, pour la détermination des écarts, les données de l'itinéraire mémorisées (21) sont comparées et affichées et en continu avec les données déterminées par le dispositif de navigation à l'estime (10, 11, 12) pour l'emplacement considéré (16) du véhicule, et que lors de l'apparition d'écarts, l'emplacement instantané (16) du véhicule affiché optiquement sur la représentation de la carte routière (14) est ramené sur l'itinéraire mémorisé (21).

3. Système de navigation selon une des précédentes revendications, caractérisé en ce que la carte routière est projetée sur un écran (14).

4. Système de navigation selon la revendication 3, caractérisé en ce que seul un extrait souhaité de la carte routière est projeté sur l'écran (14).

5. Système de navigation selon la revendication 3 ou la revendication 4, caractérisé en ce que l'itinéraire souhaité (21) est introduit dans la mémoire d'itinéraire (13) à l'aide d'un tableau transparent (17) disposé devant l'écran (14), du fait que les coordonnées du stylet (19) appliquées sur le tableau (17) lors du suivi de l'itinéraire souhaité sur la représentation de la carte routière (14), sont déterminées électriquement en continu et déposées dans la mémoire d'itinéraire (13).

6. Système de navigation selon la revendication 2, caractérisé en ce que le rappel de l'emplacement affiché (16) du véhicule sur l'itinéraire mémorisé (21) s'effectue par actionnement d'une touche de correction (23).

7. Système de navigation selon la revendication 2, caractérisé en ce que le rappel de l'emplacement affiché (16) du véhicule sur l'itinéraire mémorisé (21) s'effectue automatiquement en continu.

8. Système de navigation selon la revendication 2, caractérisé en ce que les écarts déterminés entre les déplacements du véhicule et l'itinéraire mémorisé (21), sont mémorisés de façon intermédiaire et sont traités pour déterminer des valeurs de correction grâce auxquelles des données suivantes du dispositif de navigation à l'estime permettant de déterminer l'emplacement du véhicule, sont corrigées.

**Claims**

1. Navigation system for vehicles comprising a display device (14) for representing a road map, by which the co-ordinates of a starting point (S) of the travelling route (21) and a compound navigation device are used for continuously determining the instantaneous location (16) of the vehicle and its direction of travel and visually displaying it on the representation of the road map, and in which system deviations of the location determined from the road alignment of the road map are detected and corrected, characterized in that, before the trip is started, the required travelling route (21) is manually traced on the representation of the road map (14) with a pen (19) by means of an input device (17, 18) which is arranged directly in front of the display device (14) and is connected to a travelling route store (13), is stored in the travelling route store (13) during this process and thereafter the input of the travelling route (21) into the travelling route store (13) is ended by operating an acknowledgement key (22) and the stored travelling route (21) is inserted into the representation of the road map (14).

2. Navigation system according to Claim 1, characterized in that during the trip, the data of the stored travelling route (21) are continuously compared with the data for the respective location (16) determined by the compound navigation device (10, 11, 12) for determining deviations and are indicated, and when deviations occur, the instantaneous location (16) of the vehicle which is visually indicated on the representation of the road map (14), is returned to the stored travelling route (21).

3. Navigation system according to one of the preceding claims, characterized in that the road map is projected on a screen (14).

4. Navigation system according to Claim 3, characterized in that only a required section from the road map is projected on the screen (14).

5. Navigation system according to Claims 3 or 4, characterized in that the required travelling route (21) is entered into the travelling route store (13) with the aid of a transparent tablet (17) arranged in front of the screen (14) by the co-ordinates of the pen (19) placed onto the tablet (17) being continuously determined electrically during the tracing of the required travelling route on the representation of the road map (14) and are stored in the travelling route store (13).

6. Navigation system according to Claim 2, characterized in that the returning of the indicated location (16) of the vehicle to the stored travelling route (21) is carried out by operating a correction key (23).

7. Navigation system according to Claim 2, characterized in that the returning of the indicated location (16) of the vehicle to the stored travelling route (21) is continuously automatically carried out.

8. Navigation system according to Claim 2, characterized in that the detected deviations of the vehicle movements from the stored travelling route (21) are temporarily stored and processed for determining correction values by means of which subsequent data of the compound navigation device are corrected for determining the location of the vehicle.

FIG.1

FIG.2

1

P 0 262 122 B1

FIG.3

Start — 30

Karteneingabe — 31

Routenspeicher löschen — 32

Standort eingeben — 33

Fahrroute eingeben — 34

Fahrziel eingeben — 35

Fahrroute korrekt — 36    no

Navigation ein — 37

Standort geändert — 38    no

Standort auf Fahrroute — 39    yes

Korrektur ein — 40    no

Korrekturwert berechnet — 41

Korrekturwert speichern — 42

Standort korrigieren — 43

Fahrziel erreicht — 44    no

Ende — 45